# EUROPÄISCHE PATENTSCHRIFT

(11) **EP 0 523 369 B1**
(45) Veröffentlichungstag und Bekanntmachung des Hinweises auf die Patenterteilung: **04.01.1995**
(21) Anmeldenummer: 92109770.5
(22) Anmeldetag: 10.06.1992
(51) Int. Cl.: B23D 35/00

(54) **Messerwechselvorrichtung für eine Schere zum Besäumen oder Längsteilen von Bändern**
Device for changing the cutting means of a shearing machine for trimming or slitting band material
Dispositif pour changer les moyens de coupe d'une cisaille pour voguer ou refendre un matériau en bande

(30) Priorität: 18.07.1991 DE 4123807
(43) Veröffentlichungstag der Anmeldung: 20.01.1993
(73) Patentinhaber: SUNDWIGER EISENHÜTTE MASCHINENFABRIK GmbH & CO., D-58675 Hemer (DE)
(72) Erfinder: Koepe, Wilfried, W-4712 Werne (DE)
(74) Vertreter: Cohausz & Florack Patentanwälte

(56) Entgegenhaltungen:
- EP-A- 0 287 848
- US-A- 3 478 407

## Beschreibung

Die Erfindung betrifft eine Messerwechselvorrichtung für eine Schere zum Besäumen oder Längsteilen von Bändern mit Messerwellen, die mittels einer Spannvorrichtung zwischen Distanzhaltern axial eingespannte, auswechselbare Kreismesser tragen.

Eine Schere dieser Art ist aus der DD-A 95 960 bekannt.

Aus der Praxis sind Messerwellen in Scheren zum Besäumen und Teilen von Blechbahnen bekannt (SUNDWIG-Zeichnung "Messerwelleneinbau" K 70 639 75-0302 vom 19.01.1981), die beidseitig an ihren Enden im Gestell der Schere gelagert sind. Auf ihnen sind die Kreismesser zwischen Distanzhaltern angeordnet. Die Distanzhalter legen dabei zum einen die Position der Kreismesser fest, zum anderen übertragen sie eine durch eine Spannvorrichtung ausgeübte, von den Enden der Messerwelle in axialer Richtung auf die Kreismesser gerichtete Kraft, durch die die Kreismesser axial gespannt sind. Für das Spannen werden mechanische, hydraulische oder pneumatische Spannelemente eingesetzt.

Das Auswechseln von Kreismessern und Distanzhaltern (z.B. bei einem Programmwechsel) wird bisher in der Regel von Hand ausgeführt. Dazu wird die Spannvorrichtung gelöst und die Lagerung an einem Ende der Messerwelle von der Welle abgezogen. Anschließend werden die Distanzhalter und Kreismesser an dem nun frei zugänglichen Wellenende von der Messerwelle gezogen und ausgewechselt.

Bei der Automatisierung des Auswechselvorgangs erweist sich besonders das Lösen und Demontieren der Spannvorrichtung als zeitaufwendig. Ein zusätzliches Problem liegt dabei darin, daß es aufgrund des beschränkten Raums im Bereich der Wellenlagerung schwierig ist, dort eine automatische Vorrichtung zum Demontieren der Spannvorrichtung anzuordnen.

Die Aufgabe der Erfindung besteht darin, mit einfachen Mitteln eine Messerwechselvorrichtung für eine Besäum- und Längsschere der eingangs genannten Art zu schaffen, bei der die auf den Messerwellen angeordneten Spannvorrichtungen bei geringem Platzbedarf in kurzer Zeit demontiert und montiert werden können.

Diese Aufgabe wird erfindungsgemäß dadurch gelöst, daß die Spannvorrichtung jeder Messerwelle in mindestens zwei miteinander verriegelbare Ringsegmente geteilt ist, die in radialer Richtung von der Messerwelle abnehmbar sind. Auf diese Weise ist es möglich, den in Bandlängsrichtung gesehen vor und hinter der Schere vorhandenen Raum zur Anordnung einer automatischen Vorrichtung zur Montage und Demontage der Spannvorrichtung zu nutzen. So können die Montagewerkzeuge dieser Vorrichtung in kurzer Zeit z.B. in einer geradlinigen Bewegung ohne aufwendige Steuerungen an die Ringsegmente der Spannvorrichtung herangeführt werden.

Eine einfache Ausführung eines automatischen Montagemechanismus für die Spannvorrichtung besteht darin, daß die Ringsegmente der Spannvorrichtung von verschwenkbaren Schenkeln eines drehfesten Tragegestells getragen und die Spannvorrichtungen von der Drehung der Messerwellen entkoppelt sind. Dabei ist es günstig, wenn die Schenkel des Tragestells über ein Getriebe miteinander gekoppelt sind. Durch die damit erzielte Zwangsführung der Schenkel ist die Steuerung der Vorrichtung weiter vereinfacht, da so die Position der Schenkel eines Tragegestells relativ zueinander in Abhängigkeit von dem Antrieb der Montagevorrichtung jederzeit vorbestimmt ist. Vorzugsweise sind die Schenkel mittels eines gemeinsamen Antriebes verschwenkbar.

Ist in einer Besäum- oder Längsschere ein Messerpaar eingesetzt, so ist es vorteilhaft, wenn die Schenkel der dem übereinander angeordneten Messerwellenpaar zugeordneten Tragegestelle über ein Getriebe miteinander gekoppelt sind. Auf diese Weise können die Schenkel der Spannvorrichtung mittels eines gemeinsamen Antriebes verschwenkt werden.

Die Anforderungen an die Führungsgenauigkeit des Mechanismus zum Montieren und Demontieren der Spannvorrichtung können dadurch herabgesetzt werden, daß die Spannvorrichtung auf ihrer Stirnseite einen seitlichen, kreisbogenförmigen Kragen aufweist, der nach dem Montieren der Spannvorrichtung an auf der Messerwelle angeordneten Zentriermitteln anliegt und radial nach außen an den Schenkeln gehalten wird. Mit Hilfe des beim Anlegen der Spannvorrichtung an die Messerwelle als Anschlag dienenden kreisförmigen Vorsprungs werden die Ringsegmente bei der Montage der Spannvorrichtung zwangsläufig in die vorbestimmte Position geführt, so daß eine sichere Funktion der Spannvorrichtung während des Betriebs der Schere gewährleistet ist.

Im folgenden wird die Erfindung anhand von einer ein Ausführungsbeispiel zeigenden Zeichnung näher erläutert.

Es zeigen:
- Fig. 1: eine Messerwechselvorrichtung für eine Schere zum Besäumen oder Längsteilen von Metallbändern, mit einer strichpunktiert angedeuteten verschiebbaren Wellenlagerung und einer Spannvorrichtung zum axialen Verspannen der Messerpaare,

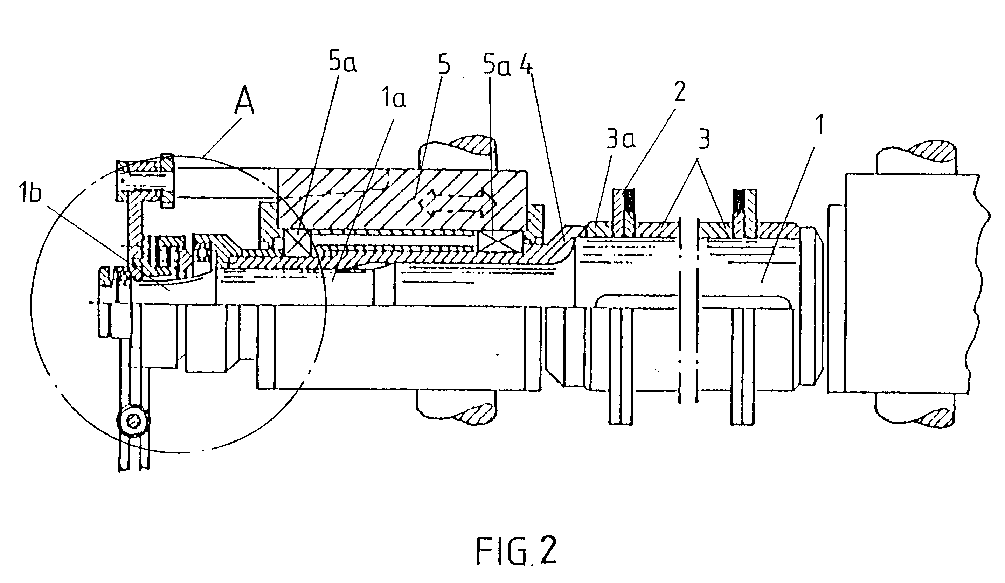

- Fig. 2: eine Messerwelle der Messerwechselvorrichtung für eine Schere gemäß Fig. 1 in Ansicht und teilweise im Axialschnitt,

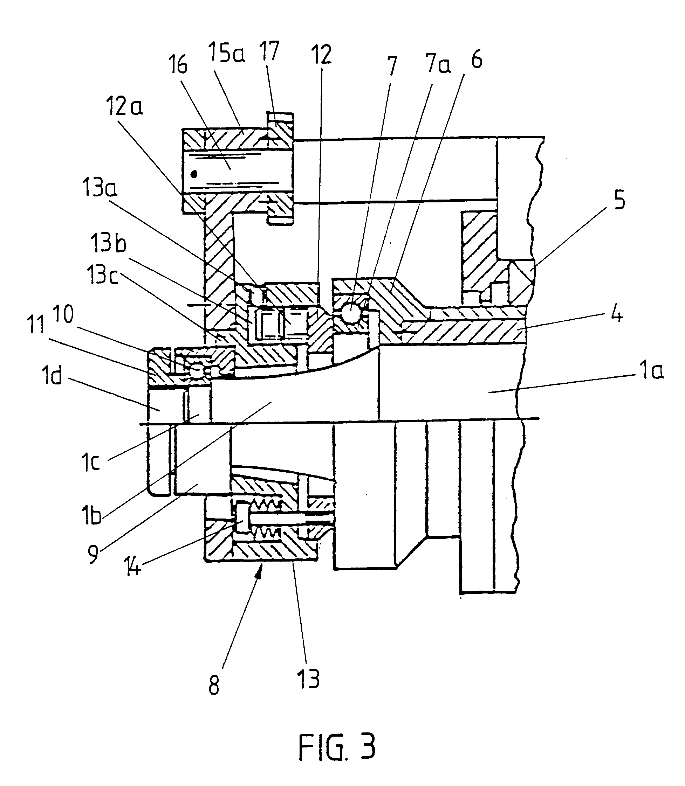

- Fig. 3: einen Ausschnitt A gemäß Fig. 2 in vergrößerter Darstellung,

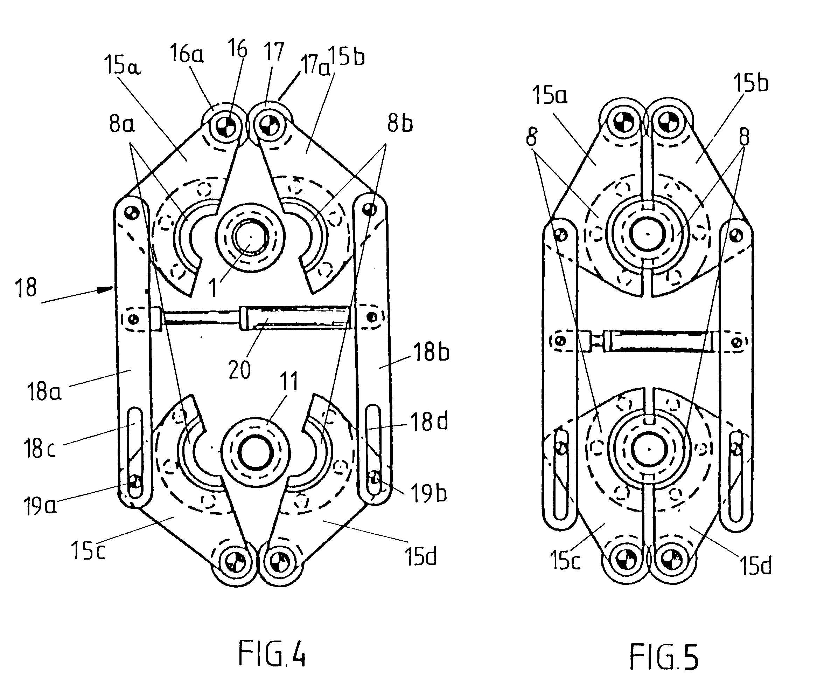

- Fig. 4: die Schere gemäß Fig. 1 mit demontierter Spannvorrichtung in Stirnansicht
**und**
- Fig. 5: die Schere gemäß Fig. 1 mit montierter Spannvorrichtung in Stirnansicht.

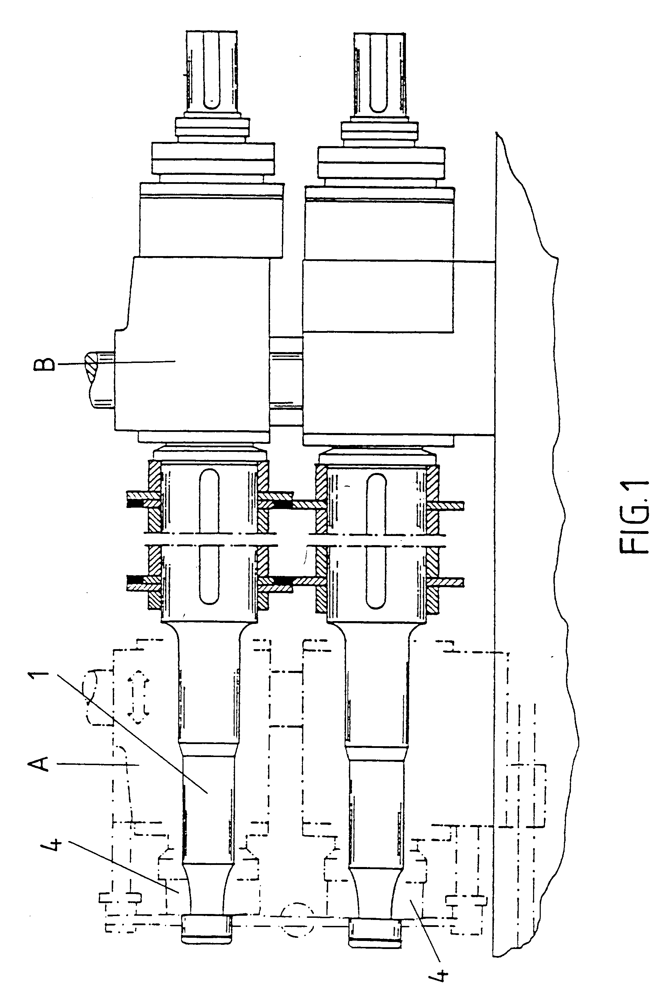

Die Schere gemäß Fig. 1 ist in zwei Gestellen A,B gelagert. Den Messerwellenenden des Gestells A sind axiale Spannvorrichtungen für die Messerpaare zugeordnet. Die Spannvorrichtungen jeder Messerwelle des Messerwellepaares sind gleich aufgebaut.

Eine Messerwelle 1 weist an dem dem Gestell A zugeordneten Ende einen gestuften Lagerzapfen 1a auf, an dessen Ende ein konischer Absatz 1b, ein zylindrischer Absatz 1c und ein Gewindezapfen 1d ausgebildet sind. Kreismesser 2 sind zwischen axial verschiebbaren Distanzhülsen 3 axial eingespannt, von denen die dem Lagerzapfen 1c zugewandte äußere Distanzhülse 3a an einer ebenfalls axial verschiebbaren Hülse 4 anliegt, die den gestuften Lagerzapfen 1a umgibt. Die Hülse 4 bildet den Innenring von Lagern 5a einer Wellenlagerung 5 und trägt an ihrer dem der Messerwelle 1 zugewandten Seite über einen Ring 6 ein Axialdruckkugellager 7, dessen Innenring 7a an einer hydraulischen Spannvorrichtung 8 anliegt. An der dem Ende der Messerwelle 1 zugewandten Seite ist die Spannvorrichtung 8 über einen Ring 9 gegen ein zweites Axialdruckkugellager 10 abgestützt, das durch eine auf dem Gewindezapfen 1d geschraubte Mutter 11 auf dem zylindrischen Absatz 1c gehalten ist.

Die Spannvorrichtung 8 besteht aus zwei symmetrisch aufgebauten Ringhälften 8a,8b, die jeweils aus einem halbkreisförmigen Druckringsegment 12 und einem ebenfalls halbkreisförmigen Zylindersegment 13 zusammengesetzt sind. Das Zylindersegment 13 weist über Druckmittelzuführungen 13a mit Druck beaufschlagbare Zylinderbohrungen 13b auf, in denen mit Dichtungen versehene Druckkolben 12a des Druckringsegmentes 12 stecken. Die Rückführung des Drucksegmentes 12 und der Druckkolben 12a in die entspreizte Ausgangsstellung bewirken die Tellerfedern auf den einstellbaren Schrauben 14 nach der Druckentlastung der Druckkolben 12a. Das Zylindersegment 13 ist mit seiner dem Ende der Messerwelle 1 zugewandten Stirnseite an dem Ring 9 abgestützt und mit einem umlaufenden halbkreisförmigen Kragen 13c zentriert, der von außen von den Ringhälften 8a,8b erfaßt wird.

Die Ringhälften 8a,8b der den Messerwellen 1 zugeordneten Spannvorrichtungen 8 werden von Schenkeln 15a,15b,15c,15d eines in einem Tragegestell gehaltenen Getriebes 18 getragen, die die Form eines ungleichschenkligen, rechtwinkligen Dreiecks haben. In ihren spitzen Winkeln sind die Schenkel 15a,15b,15c,15d eines Schenkelpaares an Zapfen 16,17 drehbar gelagert und über jeweils ein an ihrer Rückseite koaxial zu den Zapfen 16,17 befestigten Zahnrädern 16a,17a miteinander gekoppelt. Parallel zueinander angeordnete Koppelglieder 18a,18b sind gelenkig im rechten Winkel der der oberen Messerwelle 1 zugeordneten Schenkel 15a,15b befestigt. Sie weisen an ihrem unteren Ende nutenförmige Öffnungen 18c,18d auf, in die Zapfen 19a,19b eingreifen, die im rechten Winkel der den unteren Messerwellen des Messerwellenpaars zugeordneten Schenkel 15c,15d angeordnet sind. Die Koppelglieder 18a,18b sind über einen Pneumatikzylinder 20 miteinander verbunden.

Zum Wechseln der Kreismesser 2 wird bei druckentlasteten Druckzylindern 13b der Pneumatikzylinder 20 mit Druckluft beaufschlagt, so daß die Koppelglieder 18a,18b auseinandergeschoben und die Spannvorrichtungen 8 in einer scherenförmigen Bewegung in radialer Richtung von den Messerwellen abgenommen werden. Dabei bilden die miteinander kämmenden Zahnräder 16a,17a und die nutenförmigen Öffnungen 18c,18d eine Zwangsführung für die Koppelglieder 18, durch die sichergestellt ist, daß die Schenkel 15a,15b,15c,15d um jeweils den gleichen Winkelbetrag um die Zapfen 16,17 geschwenkt werden. Nachdem der Pneumatikzylinder 20 vollständig ausgefahren ist und die Wellenlagerungen 5 von den Messerwellen 1 abgezogen sind, können die Hülse 4, die Distanzhülsen 3 und die Kreismesser 2 von den Messerwellen 1 über dem im Durchmesser kleineren stirnseitigen Ring 9 der Messerwelle 1 abgezogen und neue Kreismesser 2 aufgeschoben werden. Anschließend wird der Pneumatikzylinder 20 eingefahren, wodurch die Schenkel 15a,15b,15c,15d eingeschwenkt und die Spannvorrichtung geschlossen wird. Während des Betriebs der Schere ist der Pneumatikzylinder 20 in Schließrichtung mit Druck beaufschlagt, um die Spannvorrichtungen 8 zu verriegeln. Die Druckkolben 12a sind druckbeaufschlagt und spannen die Kreismesser 2 axial ein. Die Spannvorrichtungen sind dabei durch die Axialdruckkugellager 7,10 von der Drehung der Messerwellen 1 entkoppelt.

## Patentansprüche

1. Messerwechselvorrichtung für eine Schere zum Besäumen oder Längsteilen von Bändern mit Messerwellen (1), die mittels einer Spannvorrichtung (8) zwischen Distanzhaltern (3,4) axial eingespannte, auswechselbare Kreismesser (2) tragen,
**dadurch gekennzeichnet,** daß die Spannvorrichtung (8) jeder Messerwelle (1) in mindestens zwei miteinander verriegelbare Ringsegmente (8a,8b) geteilt ist, die in radialer Richtung von der Messerwelle (1) abnehmbar sind.

2. Messerwechselvorrichtung für eine Schere nach Anspruch 1,
**dadurch gekennzeichnet,** daß die Ringsegmente (8a,8b) der Spannvorrichtung (8) von verschwenkbaren Schenkeln (15a-15d) eines drehfesten Tragegestells getragen und die Spannvorrichtung (8) von der Drehung der Messerwellen (1) entkoppelt ist.

3. Messerwechselvorrichtung für eine Schere nach Anspruch 2,
**dadurch gekennzeichnet,** daß die Schenkel (15a-15d) des Tragegestells über ein Getriebe (18) aneinander gekoppelt sind.

4. Messerwechselvorrichtung für eine Schere nach Anspruch 2 oder 3,
**dadurch gekennzeichnet,** daß die Schenkel (15a-15d) mittels eines gemeinsamen Antriebs (20) verschwenkbar sind.

5. Messerwechselvorrichtung für eine Schere nach einem der Ansprüche 2 bis 4,
**dadurch gekennzeichnet,** daß die Schenkel (15a-15d) der einem übereinander angeordneten Messerwellenpaar zugeordneten Tragegestelle über ein Getriebe (18) aneinander gekoppelt sind.

6. Messerwechselvorrichtung für eine Schere nach einem der vorhergehenden Ansprüche,
**dadurch gekennzeichnet,** daß die Spannvorrichtung (8) auf ihrer Stirnseite einen seitlichen, kreisbogenförmigen Kragen (13c) aufweist, der nach dem Anstellen/Montieren der Spannvorrichtung (8) an auf der Messerwelle (1) angeordneten Zentriermitteln (9) anliegt und radial nach außen von den Schenkeln (15a-15d) gehalten ist.

## Claims

1. A blade changing device for shears for the trimming or slitting of strips, having blade shafts (1) having interchangeable circular blades (2) axially clamped between spacers (3, 4) by means of a clamping device (8), characterized in that the clamping device (8) of each blade shaft (1) is divided into at least two annular segments (8a, 8b) which can be locked to one another and removed from the blade shaft (1) in the radial direction.

2. A blade changing device for shears according to claim 1, characterized in that the annular segments (8a, 8b) of the clamping device (8) are borne by pivotable arms (15a-15d) of a non-rotatable supporting frame, and the clamping device (8) is uncoupled from the rotation of the blade shafts (1).

3. A blade changing device for shears according to claim 2, characterized in that the arms (15a-15d) of the supporting frame are coupled to one another via a transmission (18).

4. A blade changing device for shears according to claims 2 or 3, characterized in that the arms (15a-15d) can be pivoted by means of a common drive (20).

5. A blade changing device for shears according to claims 2 to 4, characterized in that the arms (15a-15d) of the supporting frames associated with a pair of blade shafts disposed one above the other are coupled to one another via a transmission (18).

6. A blade changing device for shears according to one of the preceding claims, characterized in that the end face of the clamping device (8) has a lateral collar (13c) which is shaped like the arc of a circle and which, after the clamping device (8) has been adjusted/mounted, bears against centring means (9) disposed on the blade shaft (1) and is retained in the radially outward direction by the arms (15a-15d).

## Revendications

1. Dispositif pour changer les moyens de coupe d'une cisaille pour cisailler à largeur ou refendre des matériaux en bande, comprenant des arbres (1) à couteaux qui portent des couteaux circulaires interchangeables (2) serrés axialement entre des entretoises (3, 4) au moyen d'un dispositif de serrage (8), caractérisé en ce que le dispositif de serrage (8) de chaque arbre à couteaux (1) est divisé en au moins deux segments d'anneau (8a, 8b) verrouillables ensemble, qui peuvent être retirés de l'arbre à couteaux (1) en direction radiale.

2. Dispositif suivant la revendication 1, caractérisé en ce que les segments d'anneau (8a, 8b) du dispositif de serrage (8) sont portés par des branches oscillantes (15a à 15d) d'un châssis-support immobilisé en rotation, et en ce que le dispositif de serrage (8) est découplé de la rotation des arbres à couteaux (1).

3. Dispositif suivant la revendication 2, caractérisé en ce que les branches (15a à 15d) du châssis-support sont couplées par l'intermédiaire d'un mécanisme à engrenage (18).

4. Dispositif suivant la revendication 2 ou 3, caractérisé en ce que les branches (15a à 15d) peuvent être déplacées dans leur mouvement d'oscillation au moyen d'un dispositif d'actionnement commun (20).

5. Dispositif suivant l'une des revendications 2 à 4, caractérisé en ce que les branches (15a à 15d) du châssis-support associé à une paire superposée d'arbres à couteaux sont couplées par l'intermédiaire d'un mécanisme à engrenage (18).

6. Dispositif suivant l'une des revendications précédentes, caractérisé en ce que le dispositif de serrage (8) comporte sur sa face frontale un collet latéral (13c) en forme d'arc de cercle qui, après la mise en place/le montage du dispositif de serrage (8), s'applique sur des moyens de centrage (9) disposés sur l'arbre à couteaux (1) et est maintenu radialement vers l'extérieur par les branches (15a à 15d).
